# EUROPÄISCHE PATENTSCHRIFT

(11) **EP 1 987 185 B1**
(45) Veröffentlichungstag und Bekanntmachung des Hinweises auf die Patenterteilung: **18.11.2009**
(21) Anmeldenummer: 07711424.7
(22) Anmeldetag: 01.02.2007
(51) Int. Cl.: D04H 3/04, D04H 3/07, B29C 53/56, B29C 53/80, B29C 70/20, B29C 70/22, B29C 70/38, B29C 70/24

(54) **RÄUMLICHE TEXTILE BAUTEILSTRUKTUR AUS HOCHFESTEN FÄDEN SOWIE VERFAHREN ZU DEREN HERSTELLUNG**
THREE-DIMENSIONAL TEXTILE COMPONENT STRUCTURE CONSISTING OF HIGH-TENSILE THREADS AND METHOD FOR PRODUCING SAID STRUCTURE
STRUCTURE TEXTILE TRIDIMENSIONNELLE CONSTITUÉE DE FILS TRÈS RÉSISTANTS ET PROCÉDÉ POUR LA PRODUIRE

(30) Priorität: 11.02.2006 DE 102006006337
(43) Veröffentlichungstag der Anmeldung: 05.11.2008
(73) Patentinhaber: SGL Kümpers GmbH & Co. KG, 48429 Rheine (DE)
(72) Erfinder: KÜMPERS, Franz-Jürgen, 48429 Rheine (DE); BAUMGART, Gregor, 41749 Viersen (DE); BROCKMANNS, Karl-Josef, 47877 Willich (DE)
(74) Vertreter: Hamann, Arndt
(86) Internationale Anmeldenummer: PCT/EP2007/000850
(87) Internationale Veröffentlichungsnummer: WO 2007/090555

(56) Entgegenhaltungen:
- WO-A-99/33639
- WO-A-2005/071152
- DE-A1- 2 032 423
- DE-A1- 3 743 485
- FR-A1- 2 864 972
- JP-A- 57 139 556
- US-A- 4 320 160
- US-A- 5 345 791

## Beschreibung

Die Erfindung betrifft eine räumliche, textile Bauteilstruktur gemäß dem Oberbegriff des Anspruches 1, sowie ein Verfahren gemäß dem Oberbegriff des Anspruches 13.

Räumliche Strukturen von Bauteilen mit konstantem oder auch nicht konstantem Querschnittsverlauf über die Bauteillänge werden in zunehmendem Maße unter Verwendung hochfester Textilfäden, z.B. aus Carbonfasern, hergestellt. Diese hochfesten Fäden sind in der Lage, in ihrer Längsrichtung erhebliche Kräfte ohne bleibende Formveränderung aufzunehmen. Diese textilen Strukturen bilden entweder eine Armierung für diese Bauteile oder sind selbst wesentlicher Bestandteil des Bauteils. In letzterem Fall werden die textilen Strukturen durch insbesondere elastische Bindemittel, wie z.B. Kunstharz, in ihrer Form stabilisiert. Anwendung finden derartige Bauteile im Automobil- oder Luftfahrtsektor sowie im Bereich von Hochleistungsbauteilen für den allgemeinen Maschinen- und Anlagenbau. Hauptvorteil, dieser textilen Konstruktionen ist neben den hohen Festigkeitswerten das geringe spezifische Gewicht, welches insbesondere zur Reduzierung der Trägheit bei ihrer Verwendung in bewegten, insbesondere beschleunigten Bauteilen führt.

Ein häufiger Anwendungsfall besteht darin, dass Formkörper, die im Wesentlichen die Form des gewünschten Bauteiles aufweisen, als Kern für die textile Bauteilstruktur dienen.

In diesem Zusammenhang ist es bekannt, die textile Bauteilstruktur durch Umflechten des vorgeformten Kerns zu bilden. Dabei können über Klöppelsysteme Fäden im Winkel von 0° bis +/- 45°, bezogen auf die Längsachse des Bauteilkernes, in dieses Geflecht eingebunden werden. Bei 90°-Belastungen im Bauteil ist ein erheblicher Materialeinsatz erforderlich, da die Belastungsrichtung von der Fadenlängsrichtung aller Fäden des Geflechtes abweicht. Des Weiteren verursacht die gleichzeitige Verarbeitung von 45°-Fäden und 0°-Fäden Probleme beim Flechtprozess durch Aufschieber und Spleißer, die durch die Schärkomponenten von Carbonfilamenten aus den beiden Fadensystemen entstehen. Werden aus diesem Grunde 0°- Carbonfäden in 45°- Glasfilamente eingebunden, ist das Gebilde bei 90°-Belastungen sehr instabil. Glasfilamente in Längsrichtung führen wiederum zu einer Instabilität in Längsrichtung.

Es ist deshalb Aufgabe der Erfindung, eine räumliche textile Bauteilstruktur, die der bestimmungsgemäßen Belastung besser angepasst ist, sowie ein entsprechendes Verfahren zur Herstellung dieser räumlichen textilen Bauteilstruktur vorzuschlagen.

Diese Aufgabe wird durch die Merkmale des Anspruchs 1, sowie verfahrensseitig durch die Merkmale des Anspruchs 13 gelöst. Die Erfindung ist durch die Unteransprüche 2 bis 12 und 14 bis 20 vorteilhaft weitergebildet.

Die erfindungsgemäße räumliche textile Bauteilstruktur besteht gemäß Anspruch 1 aus übereinander angeordneten, gewickelten Lagen von Fadenscharen aus hochfesten Fäden und mindestens einer sich längs der Bauteilstruktur erstreckenden Fadenschar aus hochfesten Fäden, wobei die Fäden jeder sich längs erstreckenden Fadenschar aus hochfesten Fäden durch eine Textilstruktur aus sich verkreuzenden Fadensystemen in ihrer Lage fixiert sind.

Der tragende Teil der räumlichen textilen Bauteilstruktur wird durch schichtweise übereinander angeordnete Fadenscharen gebildet, die untereinander keine Kreuzungs- oder Abbindepunkte bilden, die zu Schärkomponenten und damit einer Schädigung der Faserstruktur führen könnten. Diese Fadenscharen können in nahezu beliebigen Winkeln gelegt werden. Ebenso wie der Winkel der Ablage der Fadenscharen kann auch die jeweilige Dichte der Fadenscharen der Belastungssituation in der jeweiligen Richtung angepasst werden.

Die Textilstruktur aus sich verkreuzenden Fadensystemen hat lediglich die Funktion der Fixierung der Lage der Fäden der sich längs erstreckenden Fadenschar, die selbst bei sich ändernden Querschnitten der Bauteilstruktur gleichmäßig auf den Umfang verteilt bleiben, das heißt, über den Umfang im wesentlichen gleiche Abstände zueinander besitzen. Der erfindungsgemäße Schichtenaufbau kann bei sehr hohen Längskräften auch mehrere durch je eine Textilstruktur fixierte, sich längs erstreckende Fadenscharen aufweisen.

Durch die Anpassung des Winkels der Ablage der jeweiligen Fadenschar zur Bauteilachse wird erreicht, dass die Kraftkomponenten bei Belastung im Wesentlichen in Längsrichtung der hochfesten Fäden verlaufen. Dies führt zu einer optimalen Substanzausnutzung der hochfesten Fäden. Dies wiederum führt dazu, dass für eine bestimmte Belastungssituation ein ökonomischer Faserstoffeinsatz möglich ist. Ablagerichtung und Anzahl der Fäden sind demzufolge der Belastungssituation angemessen. Der Winkelbereich der Ablage der Fadenscharen, bezogen auf die Längsachse des Bauteiles, reicht von 0° bis nahezu 90°. Damit sind alle denkbaren Varianten der Belastung abgedeckt. Somit gestattet die Erfindung eine für die geforderte Kraftaufnahme maßgeschneiderte Konstruktion.

Alternativ können die Fadenscharen in einem gleich bleibenden oder sich ändernden Ablagewinkel verlegt sein. Ein gleich bleibender Winkel gewährleistet eine einheitlich geschlossene Struktur der Fadenlagen, während bei sich änderndem Winkel lokale Belastungszustände optimal berücksichtigt werden können. Die Ablagestruktur muss demzufolge in Abhängigkeit von der bekannten Belastungsstruktur beim Einsatz des Bauteiles vorbestimmt werden.

Die die Längsfäden fixierende Textilstruktur kann aus Fäden gebildet werden, an deren Zugfestigkeit keine mit den hochfesten Fäden vergleichbaren Anforderungen gestellt werden und die an den Kreuzungspunkten selbst keinen Schaden nehmen. Hierfür kommen beispielsweise Glasfilamente in Frage, die deutlich preiswerter sind als beispielsweise Fäden aus Carbonfasern.

Die sich kreuzenden Fadensysteme der Textilstruktur, deren Fäden vorteilhaft einen geringere Querschnitt aufweisen als die hochfesten Fäden, sind in Weiterbildung der Erfindung zugunsten einer gestreckten Lage der hochfesten Fäden stärker ausgeformt, so dass die sich aus der Verkreuzung ergebenden Texturen nahezu vollständig durch die sich kreuzenden Fäden aufgenommen werden. Dadurch wird eine in Kraftbeanspruchungsrichtung gestreckte Lage der lastaufnehmenden Fäden gewährleistet. Die Längsfäden sind vorteilhaft als sogenannte Stehfäden in die Textilstruktur eingebunden.

Die Textilstruktur kann alternativ als Geflecht oder Gewirk ausgebildet sein. Die Bauteilstruktur ist beispielsweise durch ein Harz räumlich stabilisiert.

Verfahrensseitig werden um einen vorgeformten Kern die Fadenlagen aus Fadenscharen in unterschiedlichen Winkeln nacheinander angeordnet, das heißt, dass Verlegemechanismen und Bauteil relativ zueinander bewegt werden, wobei die Verlegemechanismen hintereinander angeordnet sind. Dadurch werden um den Bauteilkern nacheinander die Schichten in verschiedenen Winkeln aufgebaut. Die sich längs der Bauteilstruktur erstreckende Fadenschar wird in ihrer Lage mittels einer Textilstruktur aus sich kreuzenden Fadensystemen fixiert. Hinsichtlich der Reihenfolge der Anordnung der einzelnen Fadenschichten gibt es keine zwingende Vorschrift, auch wenn die Bildung der längs angeordneten Fadenschar als innerste Lage vorteilhaft ist. Abschließend kann jedoch eine weitere Lage aus sich längs erstreckenden Fäden gebildet werden.

Die unterschiedlichen Verlegewinkel werden einerseits durch die Umfangsgeschwindigkeiten von den die Fadenscharen führenden Verlegemitteln und andererseits durch die Relativgeschwindigkeit zwischen Bauteil und Verlegemitteln bestimmt. Wird beispielsweise bei gleicher Relativgeschwindigkeit zwischen Verlegemitteln und Bauteil die Umfangsgeschwindigkeit der Verlegemittel erhöht, erhöht sich auch der Winkel zur Längsachse des Bauteiles bzw. des Kernes des Bauteiles. Im Falle einer sehr hohen Umfangsgeschwindigkeit der Verlegemittel für die Fadenscharen und einer geringen Vorschubgeschwindigkeit des Bauteiles kann ein Ablagewinkel von nahezu 90° erreicht werden. Nehmen die Verlegemittel an einer Rotation nicht teil, werden so genannte 0°-Fäden abgelegt, die koaxial zur Bauteillängsachse verlaufen. Diese Fäden werden dann als so genannte Stegfäden in die Textilstruktur eingebunden. Je nach Rotationsrichtung der Verlegemittel werden positive oder negative Ablagewinkel im Verhältnis zur Längsachse erzielt.

Durch Veränderung der jeweiligen Geschwindigkeiten können die Verlegewinkel lokalen Anforderungen angepasst werden.

Die Textilstruktur aus sich verkreuzenden Fadensystemen zur Fixierung der längs orientierten Fadenlagen ist für die späteren Gebrauchseigenschaften der Bauteilstruktur nahezu ohne Belang. Es ist also darauf Wert zu legen, dass der Materialeinsatz so gering wie möglich bzw. notwendig gewählt wird und das Verfahren eine hohe Produktivität gewährleistet. Das heißt, dass die Struktur auch relativ offen gestaltet werden kann, wodurch sich die Leistungsfähigkeit dieses Prozesses erhöht. Insbesondere ist es vorteilhaft, die sich kreuzenden Fäden mit relativ geringer Fadenspannung zuzuführen, um die sich aus der Verkreuzung ergebenden Texturen nahezu vollständig durch diese Fäden aufzunehmen, während die Kraft aufnehmenden Längsfäden nahezu vollständig gestreckt in die Textilstruktur eingebettet sind.

Da alle Legeprozesse und der Fixierprozess der Längsfäden gleichzeitig, das heißt, während eines Durchlaufes der Bauteilstruktur in Stufen ablaufen können, ist eine hohe Produktivität gewährleistet.

Durch das anschließende Abbinden mit einem Harz wird die Struktur auch räumlich so fixiert, dass es möglich ist, den beim Erzeugen der textilen Bauteilstruktur noch erforderlichen Kern anschließend zu entsorgen. Es entsteht ein Hohlkörper, der sowohl gute Elastizitäts- als auch hervorragende Trageeigenschaften besitzt. Dessen niedriges Gewicht sorgt darüber hinaus für hervorragende Eigenschaften in der Anwendung.

Das Entsorgen des Kernes kann durch Auflösen des Kernmaterials (lösliche Sande) oder Schrumpfen (beispielsweise aufblasbare Struktur) erfolgen.

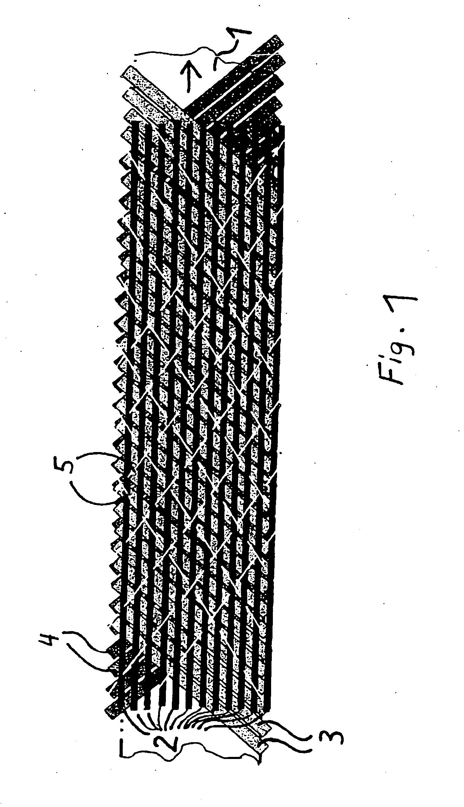

Die Erfindung ist nachfolgend anhand eines Ausführungsbeispiels weiter erläutert. Die einzige Figur zeigt die textile Bauteilstruktur inklusive Kern im Herstellungsprozess.

Der Kern 1 ist beispielsweise als Stoßstange eines Automobils geformt. Dieser Kern 1 wird in Pfeilrichtung durch die entsprechenden Zuführorgane für die Fadenscharen 2 bis 4, sowie die Flechtwerkzeuge zur Erzeugung eines Geflechtes 5 geschoben.

Zunächst wird eine Fadenschar 2 zugeführt, deren Zuführorgane ortsfest angeordnet sind, so dass diese Fadenschar parallel zur Längsachse des Kernes 1 liegt. Diese Fadenschar 2 wird mittels eines Geflechtes 5 als Schar von so genannten Stehfäden eingebunden und in ihrer Lage so fixiert, dass auch bei Form- und Querschnittsänderungen des Kerns die Fäden der Fadenschar 2 gleiche Abstände zueinander über den Umfang des Kerns 1 haben.

Die Fadenschar 3 wird im Uhrzeigersinn um den Kern 1 mit relativ hoher Umfangsgeschwindigkeit gelegt, so dass sich ein Ablagewinkel von ca. 70° ergibt. Die Fadenschar 4 wird in Gegenrichtung um den Kern 1 mit etwas geringerer Umlaufgeschwindigkeit gelegt. Dadurch ergibt sich ein Ablagewinkel von -60°.

Alternativ zur Bewegung des Kernes 1 könnten auch die entsprechenden Lege- und Flechtorgane entlang des Bauteiles bewegt werden. Es kommt hierbei jeweils auf die entsprechende Relativgeschwindigkeit an.

Zur Vereinfachung ist in der Zeichnung jeweils nur ein Faden der jeweiligen Fadenschar 3, 4 dargestellt. In der Praxis wird, wie durch den Begriff "Fadenschar" zum Ausdruck kommt, eine Schar parallel zueinander liegender Fäden gelegt. Dabei sollte die Breite der Fadenschar so eingestellt werden, dass beim Wickeln die Lagen so nebeneinander zu liegen kommen, dass der gleich bleibende Fadenabstand nicht nur innerhalb der Schar gewährleistet ist, sondern auch zwischen den spiralförmig verlaufenden Lagen.

## Patentansprüche

1. Räumliche textile Bauteilstruktur aus hochfesten Fäden, die im bestimmungsgemäßen Einsatz Belastungen in definierten Richtungen ausgesetzt ist,
**dadurch gekennzeichnet,dass**
die Bauteilstruktur aus übereinander angeordneten, gewickelten Lagen von Fadenscharen (3, 4) aus den hochfesten Fäden und mindestens einer sich längs der Bauteilstruktur erstreckenden Fadenschar (2) aus den hochfesten Fäden besteht und dass die Fäden jeder sich längs erstreckenden Fadenschar (2) durch eine Textilstruktur (5) aus sich verkreuzenden Fadensystemen in ihrer Lage fixiert sind.

2. Räumliche textile Bauteilstruktur nach Anspruch 1,
**dadurch gekennzeichnet, dass**
die Fadenscharen in Winkeln zur Bauteilachse angeordnet sind, die auf die definierten Hauptbelastungsrichtungen so abgestimmt sind, dass die bei Belastung wirkenden Kraftkomponenten im Wesentlichen in Längsrichtung der hochfesten Fäden verlaufen.

3. Räumliche textile Bauteilstruktur nach Anspruch 1 oder 2,
**dadurch gekennzeichnet, dass**
die Anzahl der hochfesten Fäden innerhalb der jeweiligen Fadenschar unterschiedlich und auf die Höhe der vorgesehenen Belastungen abgestimmt ist.

4. Räumliche textile Bauteilstruktur nach einem der Ansprüche 1 bis 3,
**dadurch gekennzeichnet, dass**
die Fadenscharen in einem Winkelbereich von 0° bis nahezu 90° angeordnet sind.

5. Räumliche textile Bauteilstruktur nach Anspruch 4,
**dadurch gekennzeichnet, dass**
jede Fadenschar in einem gleich bleibenden Winkel verlegt ist.

6. Räumliche textile Bauteilstruktur nach Anspruch 4,
**dadurch gekennzeichnet, dass**
bei mindestens einer Fadenschar der Ablagewinkel in Abhängigkeit von lokalen Belastungszuständen des Bauteils bei seinem bestimmungsgemäßen Einsatz variiert.

7. Räumliche textile Bauteilstruktur nach einem der Ansprüche 1 bis 6,
**dadurch gekennzeichnet, dass**
die Textilstruktur (5), welche die sich längs erstreckenden Fadenschar (2) fixiert, aus Fäden gebildet ist, die gegenüber den hochwertigen Fäden des Schichtenaufbaus geringwertiger sind und eine geringere Zugfestigkeit haben.

8. Räumliche textile Bauteilstruktur nach Anspruch 4,
**dadurch gekennzeichnet, dass**
die Fäden der fixierenden Textilstruktur (5) einen geringeren Querschnitt als die hochfesten Fäden (2-4) aufweisen und die weitgehend gestreckte Form der hochfesten Fäden nicht beeinträchtigen.

9. Räumliche textile Bauteilstruktur nach einem der Ansprüche 1 bis 8,
**dadurch gekennzeichnet, dass**
die fixierende Textilstruktur (5) durch Flechten erzeugt ist.

10. Räumliche textile Bauteilstruktur nach einem der Ansprüche 1 bis 8,
**dadurch gekennzeichnet, dass**
die fixierende Textilstruktur (5) eine Gewirkestruktur ist.

11. Räumliche textile Bauteilstruktur nach einem der Ansprüche 9 oder 10,
**dadurch gekennzeichnet, dass**
die zu fixierenden Fäden (2) als Stehfäden in die Textilstruktur (5) eingebunden sind.

12. Räumliche textile Bauteilstruktur nach einem der Ansprüche 1 bis 11,
**dadurch gekennzeichnet, dass**
die Fadenscharen mittels Kunstharz räumlich stabilisiert sind.

13. Verfahren zur Erzeugung von räumlichen textilen Bauteilstrukturen gemäß Anspruch 1, die zumindest während ihres Herstellungsprozesses um einen vorgeformten Kern angeordnet werden,
**dadurch gekennzeichnet, dass**
Fadenscharen (2-4) als Fadenlagen in unterschiedlichen Winkeln nacheinander um den vorgeformten Kern (1) zur Erzeugung von selbständigen Schichten aus parallelen hochfesten Fäden gelegt werden, wobei mindestens eine sich längs der Bauteilstruktur erstreckende Fadenlage (2) durch eine Textilstruktur (5) aus sich verkreuzenden Fadensystemen fixiert wird, während die übrigen Fadenscharen (3, 4) gewickelt werden.

14. Verfahren nach Anspruch 13, **dadurch gekennzeichnet, dass**
die unterschiedlichen Verlegewinkel durch die Umfangsgeschwindigkeit von den die Fadenscharen führenden Verlegemitteln im Verhältnis zur Geschwindigkeit der Positionsänderung des Bauteilkernes gegenüber den Verlegemitteln eingestellt werden.

15. Verfahren nach Anspruch 14, **dadurch gekennzeichnet, dass**
die sich verkreuzenden Fäden der Textilstruktur (5) unter einer solch geringen Fadenspannung zugeführt werden, dass sie die Fäden (2) aus hochwertigem Material, die sie fixieren, nicht spürbar aus deren Verlegerichtung auslenken.

16. Verfahren nach einem der Ansprüche 13 bis 15, **dadurch gekennzeichnet, dass**
die Fixierung der sich längs erstreckenden Fadenlage (2) durch Flechten erfolgt.

17. Verfahren nach einem der Ansprüche 13 bis 15, **dadurch gekennzeichnet, dass** die Fixierung der sich längs erstreckenden Fadenlage (2) durch Wirken erfolgt.

18. Verfahren nach Anspruch 13, **dadurch gekennzeichnet, dass**
die räumliche textile Bauteilstruktur nach deren Herstellung durch ein Kunstharz abgebunden und **dadurch** in ihrer Form fixiert wird.

19. Verfahren nach Anspruch 18, **dadurch gekennzeichnet, dass**
nach dem Fixieren der Form der textilen Bauteilstruktur der vorgeformte Kern (1) entsorgt wird.

20. Verfahren nach Anspruch 19, **dadurch gekennzeichnet, dass**
der Kern (1) aufgelöst oder geschrumpft und in diesem Zustand aus der hohlen Bauteilstruktur entfernt wird.

## Claims

1. Three-dimensional textile component structure made of high-tensile threads, which is subject to loads in defined directions in the intended use, **characterised in that** the component structure consists of wound layers arranged one above the other of thread sheets (3, 4) made of the high-tensile threads and at least one thread sheet (2) extending along the component structure, made of the high-tensile threads and **in that** the threads of each longitudinally extending thread sheet (2) are fixed with respect to their position by a textile structure (5) made of intersecting thread systems.

2. Three-dimensional textile component structure according to claim 1, **characterised in that** the thread sheets are arranged at angles to the component axis, which are matched to the defined main load directions in such a way that the force components acting during loading substantially extend in the longitudinal direction of the high-tensile threads.

3. Three-dimensional textile component structure according to claim 1 or 2, **characterised in that** the number of high-tensile threads within the respective thread sheet is different and matched to the level of the loads provided.

4. Three-dimensional textile component structure according to any one of claims 1 to 3, **characterised in that** the thread sheets are arranged in an angle range of 0° to virtually 90°.

5. Three-dimensional textile component structure according to claim 4, **characterised in that** each thread sheet is laid at an angle remaining constant.

6. Three-dimensional textile component structure according to claim 4, **characterised in that** in at least one thread sheet, the depositing angle varies as a function of local load states of the component during its intended use.

7. Three-dimensional textile component structure according to any one of claims 1 to 6, **characterised in that** the textile structure (5), which fixes the longitudinally extending thread sheet (2), is formed from threads, which are of lower value than the high-value threads of the layer structure and have lower tensile strength.

8. Three-dimensional textile component structure according to claim 4, **characterised in that** the threads of the fixing textile structure (5) have a smaller cross section than the high-tensile threads (2-4) and do not impair the substantially drawn form of the high-tensile threads.

9. Three-dimensional textile component structure according to any one of claims 1 to 8, **characterised in that** the fixing textile structure (5) is produced by braiding.

10. Three-dimensional textile component structure according to any one of claims 1 to 8, **characterised in that** the fixing textile structure (5) is a knitted structure.

11. Three-dimensional textile component structure according to either of claims 9 or 10, **characterised in that** the threads (2) to be fixed are incorporated into the textile structure (5) as standing ends.

12. Three-dimensional textile component structure according to any one of claims 1 to 11, **characterised in that** the thread sheets are stabilised three-dimensionally by means of synthetic resin.

13. Method for producing three-dimensional textile component structures according to claim 1, which are arranged around a preshaped core at least during their production process, **characterised in that** thread sheets (2-4) are laid as thread layers at different angles one after the other around the preshaped core (1) to produce independent layers of parallel high-tensile threads, at least one thread layer (2) extending along the component structure being fixed by a textile structure (5) made of intersecting thread systems, while the remaining thread sheets (3, 4) are wound.

14. Method according to claim 13, **characterised in that** the different laying angles are adjusted by the peripheral speed of the laying means guiding the thread sheets in relation to the speed of the positional change of the component core relative to the laying means.

15. Method according to claim 14, **characterised in that** the intersecting threads of the textile structure (5) are supplied at such a low thread tension that they do not noticeably deflect the threads (2) made of high-value material, which they fix, from their laying direction.

16. Method according to any one of claims 13 to 15,
**characterised in that** the longitudinally extending thread layer (2) is fixed by braiding.

17. Method according to any one of claims 13 to 15,
**characterised in that** the longitudinally extending thread layer (2) is fixed by knitting.

18. Method according to claim 13, **characterised in that** the three-dimensional textile component structure is bound after production thereof by a synthetic resin and thereby fixed with respect to its shape.

19. Method according to claim 18, **characterised in that** after the fixing of the shape of the textile component structure, the preshaped core (1) is disposed of.

20. Method according to claim 19, **characterised in that** the core (1) is dissolved or shrunk and removed in this state from the hollow component structure.

## Revendications

1. Structure textile tridimensionnelle constituée de fils très résistants et exposée à des contraintes dans des directions bien définies, lorsqu'elle est employée conformément à sa destination,
**caractérisée par le fait que**
ladite structure est composée de couches enroulées, agencées en superposition, de nappes (3, 4) constituées des fils très résistants, et d'au moins une nappe (2) constituée desdits fils très résistants et s'étendant le long de ladite structure ; et **par le fait que** les fils de chaque nappe (2) s'étendant longitudinalement sont verrouillés en position par une structure textile (5) en des systèmes de fils s'entrecroisant.

2. Structure textile tridimensionnelle selon la revendication 1,
**caractérisée par le fait que**
les nappes de fils sont disposées, vis-à-vis de l'axe de la pièce structurelle, en décrivant des angles coordonnés avec les directions de contraintes principales bien définies, de façon telle que les composantes de forces, agissant lors d'une contrainte, s'étendent pour l'essentiel dans la direction longitudinale des fils très résistants.

3. Structure textile tridimensionnelle selon la revendication 1 ou 2,
**caractérisée par le fait que**
le nombre des fils très résistants, à l'intérieur de la nappe de fils considérée, est différent et est coordonné avec l'ampleur des contraintes prévues.

4. Structure textile tridimensionnelle selon l'une des revendications 1 à 3,
**caractérisée par le fait que**
les nappes de fils sont disposées dans une plage angulaire de 0° à approximativement 90°.

5. Structure textile tridimensionnelle selon la revendication 4,
**caractérisée par le fait que**
chaque nappe de fils est appareillée selon un angle constant.

6. Structure textile tridimensionnelle selon la revendication 4,
**caractérisée par le fait que**,
dans au moins une nappe de fils, l'angle de distribution varie en fonction de conditions de contraintes locales de la pièce structurelle lors de son utilisation conforme à sa destination.

7. Structure textile tridimensionnelle selon l'une des revendications 1 à 6,
**caractérisée par le fait que**
la structure textile (5), verrouillant en place la nappe de fils (2) s'étendant longitudinalement, est formée de fils dont la qualité est moindre que celle des fils de haute qualité de l'agencement stratifié, et qui présentent une plus faible résistance à la traction.

8. Structure textile tridimensionnelle selon la revendication 4,
**caractérisée par le fait que**
les fils de la structure textile (5) de verrouillage en place présentent une moindre section transversale que les fils très résistants (2-4), et n'exercent aucune influence négative sur la forme amplement allongée desdits fils très résistants.

9. Structure textile tridimensionnelle selon l'une des revendications 1 à 8,
**caractérisée par le fait que**
la structure textile (5) de verrouillage en place est produite par tressage.

10. Structure textile tridimensionnelle selon l'une des revendications 1 à 8,
**caractérisée par le fait que**
la structure textile (5) de verrouillage en place est une structure tricotée.

11. Structure textile tridimensionnelle selon l'une des revendications 9 ou 10,
**caractérisée par le fait que**
les fils (2), devant être verrouillés en position, sont intégrés dans la structure textile (5) en tant que fils d'âme.

12. Structure textile tridimensionnelle selon l'une des revendications 1 à 11,
**caractérisée par le fait que**
les nappes de fils sont stabilisées dans l'espace au moyen d'une résine synthétique.

13. Procédé de fabrication de structures textiles tridimensionnelles selon la revendication 1 disposées, au moins pendant leur processus de production, autour d'un noyau préformé,
**caractérisé par le fait que**
des nappes de fils (2-4) sont successivement appareillées en tant que couches de fils autour dudit noyau préformé (1), en vue de produire des strates autonomes de fils parallèles très résistants, sachant qu'au moins une couche de fils (2), s'étendant le long de la structure, est verrouillée en position par une structure textile (5) en des systèmes de fils s'entrecroisant, tandis que les nappes de fils restantes (3, 4) sont enroulées.

14. Procédé selon la revendication 13, **caractérisé par le fait que**
les angles d'appareillage différents sont réglés par la vitesse périphérique des moyens d'appareillage guidant les nappes de fils, suivant le rapport avec la vitesse de la variation de position du noyau de la pièce structurelle vis-à-vis desdits moyens d'appareillage.

15. Procédé selon la revendication 14, **caractérisé par le fait que**
les fils de la structure textile (5), s'entrecroisant, sont délivrés sous une faible tension telle qu'ils ne dévient pas perceptiblement, de leur direction d'appareillage, les fils (2) en un matériau de haute qualité dont ils assurent le verrouillage en position.

16. Procédé selon l'une des revendications 13 à 15, **caractérisé par le fait que**
le verrouillage en place de la couche de fils (2) s'étendant longitudinalement a lieu par tressage.

17. Procédé selon l'une des revendications 13 à 15, **caractérisé par le fait que**
le verrouillage en place de la couche de fils (2) s'étendant longitudinalement a lieu par tricotage.

18. Procédé selon la revendication 13, **caractérisé par le fait que**
la structure textile tridimensionnelle est liée par une résine synthétique, à l'issue de sa production, de sorte qu'elle est verrouillée à demeure dans sa configuration.

19. Procédé selon la revendication 18, **caractérisé par le fait que**
le noyau préformé (1) est éliminé à l'issue du verrouillage à demeure de la configuration de la structure textile tridimensionnelle.

20. Procédé selon la revendication 19, **caractérisé par le fait que**
le noyau (1) est dissous ou thermorétracté et est extrait, dans cette condition, de la structure creuse.
